**Europäisches Patentamt**

**European Patent Office**

**Office européen des brevets**

(11) Numéro de publication : **0 474 526 A1**

(12) **DEMANDE DE BREVET EUROPEEN**

(21) Numéro de dépôt : **91402185.2**

(22) Date de dépôt : **05.08.91**

(51) Int. Cl.⁵ : **A23L 3/00,** A23L 3/02

(30) Priorité : **08.08.90 FR 9010111**

(43) Date de publication de la demande :
**11.03.92 Bulletin 92/11**

(84) Etats contractants désignés :
**AT BE CH DE DK ES FR GB GR IT LI LU NL SE**

(71) Demandeur : **A.T.M. (Société à responsabilité Limitée)**
**10, Rue Rigollet**
**F-93700 Drancy (FR)**

(72) Inventeur : **Gomez, Robert**
**10, Rue Rigollet**
**F-93700 Drancy (FR)**

(74) Mandataire : **Laget, Jean-Loup et al**
**Cabinet Pierre Loyer 77, rue Boissière**
**F-75116 Paris (FR)**

(54) **Installation de stérilisation.**

(57)     Installation de stérilisation de produits déjà placés dans des récipients fermés, à colonne hydrostatique.
    La circulation des produits dans la zone de préchauffage C, dans la chambre de stérilisation D et dans le refroidisseur E se fait essentiellement horizontalement. La zone de préchauffage C est au dessus de la chambre de stérilisation D et en dessous du refroidisseur E.

EP 0 474 526 A1

La présente invention concerne une installation de stérilisation de produits déjà placés dans des récipients fermés tels que boîtes de conserve ou flacons en verre, par exemple des produits alimentaires.

De manière connue en soi, la stérilisation de tels produits est effectuée dans des installations de grande hauteur.

Ces installations se présentent sous la forme d'une enceinte de très grandes dimensions comportant une colonne hydrostatique. La surface du liquide, usuellement de l'eau, contenu dans la colonne hydrostatique est soumise à la pression atmosphérique. Grâce à la hauteur d'eau contenue dans l'installation, chaque zone de celle-ci est soumise à une pression supérieure à la pression atmosphérique ce qui permet d'obtenir de l'eau à une température supérieure à 100°C afin d'assurer la stérilisation des produits.

Lesdits produits sont contenus dans des emballages tels que des boîtes métalliques ou des bocaux de verre et sont disposés dans des paniers qui sont déplacés à l'aide de chaînes dans l'enceinte de stérilisation durant le temps nécessaire à leur traitement.

De manière usuelle, lesdites chaînes font un circuit alternant des montées et des descentes dans ladite enceinte. Les opérations d'entretien de celles-ci nécessitent alors de les décrocher afin de les sortir partiellement ou totalement de l'enceinte.

L'augmentation des produits emballés sous vide avec très peu ou pas de jus grève largement le rendement de telles installations du fait que de tels produits circulent mal dans les boîtes et se mélangent mal, ce qui oblige à prévoir des durées de stérilisation plus longues donc coûteuses en énergie et risquant de dégrader les aliments, ou à se contenter d'une qualité insuffisante de la stérilisation.

Afin de résoudre ce problème et d'obliger les produits à se mélanger, il a déjà été proposé dans le document EP-0082228 un panier tel que les boîtes ne puissent rouler sur elles-mêmes mais soient soumises à une rotation par basculement bout pour bout ce qui uniformise le traitement de stérilisation.

Toutefois, ces paniers n'ont pas résolu totalement le problème car il est très difficile de réaliser des moyens assurant leur rotation pendant leurs déplacements verticaux dans les installations de stérilisation de type connu.

La présente invention tend alors à proposer une installation de stérilisation d'un type nouveau qui soit spécialement bien adaptée à la stérilisation de produits conditionnés.

L'invention a pour objet une installation de stérilisation de produits déjà placés dans des récipients fermés, du type comportant une colonne hydrostatique, une zone de préchauffage, une chambre de stérilisation, un refroidisseur et un poste de transfert, caractérisée en ce que la zone de préchauffage (C), la chambre de stérilisation (D) et le refroidisseur (E) sont disposés horizontalement de sorte que la circulation des produits se fasse essentiellement horizontalement.

Selon d'autres caractéristiques de l'invention:
– la zone de préchauffage (C) la chambre de stérilisation (D) et le refroidisseur (E) sont disposés en superposition, la chambre de stérilisation (D) étant en bas et le refroidisseur (E) en haut;
– la zone de préchauffage (C) et le refroidisseur (E) ont une structure en nappes.

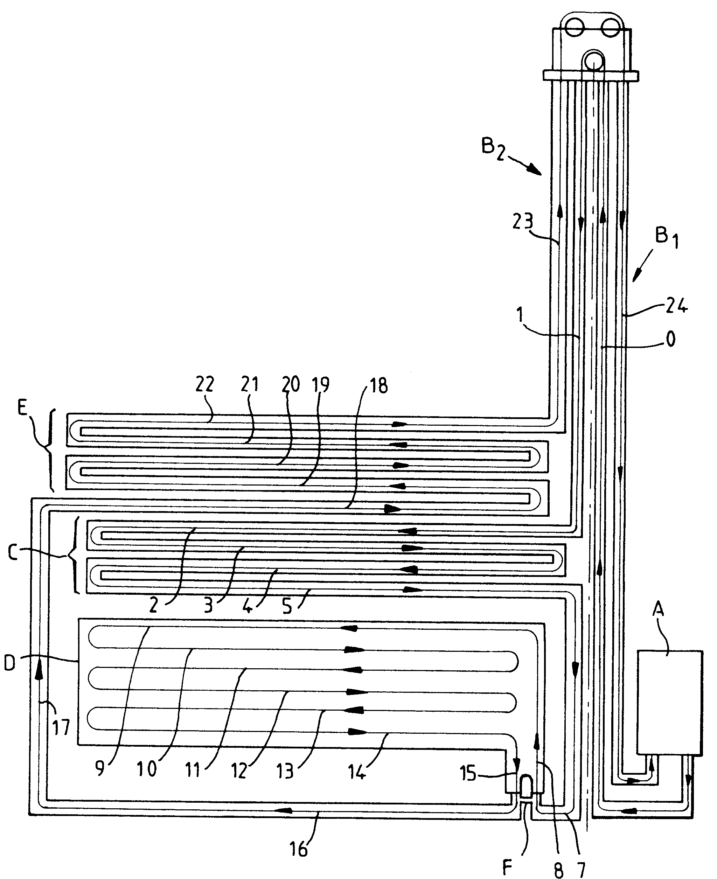

L'invention sera mieux comprise par la description qui va suivre en référence à la figure unique jointe.

Sur la figure, on voit en A le poste de transfert dans lequel les produits à stériliser sont chargés dans les paniers assurant leur transport dans l'installation.

L'installation selon l'invention comporte une colonne de grande hauteur présentant une première partie B1 de circulation à l'air libre, et une seconde partie B2 constituant la colonne hydrostatique.

L'installation comporte également une partie de traitement thermique dans laquelle les déplacements des paniers se font sensiblement horizontalement. Cette partie de traitement comporte une zone de préchauffage C, une chambre de stérilisation D et un refroidisseur E.

Le circuit des produits est référencé sur la figure par des segments numérotés de 0 à 24 et le sens de circulation par des flèches.

Les produits mis en place dans le poste de transfert A se déplacent tout d'abord dans la colonne O sèche jusqu'en haut de la colonne hydrostatique pour arriver dans la colonne 1 remplie d'eau dont la température en haut de la colonne est de l'ordre de 75°C et augmente au fur et à mesure que les produits se déplacent vers la zone de préchauffage C.

Les tronçons 2, 3, 4, 5 sont disposés horizontalement les uns au dessus des autres et des moyens de chauffage sont prévus pour réchauffer l'eau jusqu'à environ 105°C. Ces moyens sont usuellement des tubes percés pour assurer l'arrivée de vapeur d'eau et la faire barboter dans l'eau. Ce barbotage est commandé par une vanne thermostatique.

Les tronçons 2, 3, 4, 5 sont formés par des conduits disposés les uns au-dessus des autres, à l'intérieur desquels les paniers sont entraînés par des chaînes. Les paniers sont posés sur les surfaces inférieures des conduits et sont entraînés grâce à des ergots des chaînes situés de part et d'autre des paniers, à l'intérieur des conduits.

La combinaison du poids des paniers, assurant que ceux-ci sont toujours sur lesdites surfaces inférieures, et de la disposition suivant laquelle les chaînes les tirent dans le sens d'avancement par des ergots, permet de les déplacer en les faisant tourner sur eux-mêmes en roulant sur le fond.

La colonne d'eau présente dans le tronçon 1, a une hauteur d'environ 10 mètres, ce qui assure une pression d'environ 1 bar dans la zone de préchauffage C. Le chauffage lent des produits emballés dans la zone de préchauffage permet d'éviter la formation de poches d'air nuisibles à la qualité de la stérilisation.

Après cette période de préchauffage, les paniers pénètrent dans une chambre de stérilisation D qui est une enceinte de dimensions assez importantes pour que plusieurs tronçons du circuit de stérilisation, ici les tronçons 9 à 14 puissent s'y trouver. Dans la chambre de stérilisation, la température est de l'ordre de 125°C et l'on est en atmosphère de vapeur saturante.

Dans la chambre de stérilisation D, les tronçons 9 à 14 sont disposés horizontaux et les paniers se déplacent sur des chemins de roulement horizontaux.

Les tronçons sont en nombre suffisant pour que le temps durant lequel les produits séjournent dans la chambre de stérilisation soit celui nécessaire pour que leur stérilisation soit correctement réalisée.

Le passage dans la chambre de stérilisation D est suivi d'un circuit dans un refroidisseur E au cours duquel un refroidissement lent des produits est assuré jusqu'à environ 60°C sous une pression de 0,6 bar.

Le refroidisseur E est conformé de manière analogue à la zone de préchauffage C, en conduits dans lesquels sont prévus les tronçons 18 à 22 du circuit. Les produits stérilisés et refroidis sont alors entraînés dans la colonne hydrostatique B2 le long des tronçons humide 23 et sec 24 pour leur retour au poste de transfert où ils sont déchargés des paniers.

L'installation suivant l'invention permet d'obtenir une stérilisation parfaite des produits par le fait que les emballages tournent sur eux-mêmes par basculement, ce qui améliore le brassage et évite les point chauds.

L'installation selon l'invention comporte une partie verticale, la colonne hydrostatique, mais elle se trouve dans son ensemble disposée horizontalement. Il en résulte que les paniers qui transportent les produits se déplacent la plupart du temps sur des chemins de roulement horizontaux. De ce fait, ils ont seulement besoin d'être guidés au cours de leur déplacement et non plus d'être portés comme dans les installations classiques à disposition sensiblement verticale. En conséquence, l'énergie dépensée pour assurer le déplacement des paniers se trouve réduite.

Par ailleurs, la structure de l'installation est réalisée en nappes et le volume d'eau à mettre en oeuvre est réduit par rapport aux installations classiques.

De plus, les interventions sur l'installation sont rendues plus limitées du fait de la structure en nappes.

La disposition de la chambre de stérilisation D en bas de l'installation avec au-dessus d'elle la zone de préchauffage C et le refroidisseur E permet de réaliser des économies d'énergie par récupération de la chaleur dissipée.

En haut de la colonne hydrostatique B2, un réservoir non représenté sur la figure est prévu pour recueillir l'eau débordante de la colonne 1 lorsque l'on alimente l'installation en produits à stériliser.

Une pompe également non représentée assure le retour de l'eau du réservoir dans l'installation lorsque celle-ci est vidée de ses produits. Il est, en effet, indispensable de conserver un niveau d'eau constant dans la colonne hydrostatique afin de conserver une pression et une température constantes dans chaque partie de l'installation.

L'eau que l'on rajoute dans l'installation lorsque le niveau baisse quand on sort les produits stérilisés est ajoutée à contre-courant c'est-à-dire dans la colonne 23 par laquelle sortent les produits.

Ainsi, elle remplit l'installation en se réchauffant peu à peu dans le refroidisseur E avant de pénétrer dans la zone de préchauffage C par le passage de liaison F prévu à cet effet entre les tronçons 8 et 15 a un niveau inférieur à la chambre de stérilisation D.

L'eau est ainsi rajoutée à la température ambiante c'est-à-dire à environ 25°C sans perturber le fonctionnement de l'installation.

L'installation est à contre-courant intégral.

Le tronçon 23 de la colonne hydrostatique, qui sort du refroidisseur, débouche à l'air libre un peu plus haut que le tronçon 1 qui va à la zone de préchauffage.

De ce fait, il y a un courant d'eau qui descend dans le tronçon 23, qui parcourt le refroidisseur, qui arrive au passage de liaison F entre les tronçons 15 et 8, qui parcourt la zone de préchauffage, qui remonte le tronçon 1 et qui déborde pour aboutir à un bac de compensation non représenté. L'eau d'alimentation du tronçon 23 est pompée dans le bac de compensation.

Ainsi, dans la chambre de stérilisation D, les produits circulent en atmosphère de vapeur saturante.

En dehors de cette chambre D, ils circulent dans l'eau, à contre-courant, depuis leur entrée dans le tronçon 1 jusqu'à leur sortie du tronçon 23.

Grâce à cette circulation à contre-courant intégral, la récupération des calories de l'eau pour le chauffage des produits est maximale.

**Revendications**

1. Installation de stérilisation de produits déjà placés dans des récipients fermés, du type comportant une colonne hydrostatique, une zone de préchauffage, une chambre de stérilisation, un refroidisseur et un poste de transfert, caractérisée en ce que la zone de préchauffage (C), la chambre de stérilisation (D) et le refroidisseur (E) sont disposés horizontalement de sorte que la circulation des produits se fasse essentiellement horizontalement.

2.  Installation selon la revendication 1, caractérisée en ce que la zone de préchauffage (C) la chambre de stérilisation (D) et le refroidisseur (E) sont disposés en superposition, la chambre de stérilisation (D) étant en bas et le refroidisseur (E) en haut.

3.  Installation selon la revendication 1 caractérisée en ce que la zone de préchauffage (C) et le refroidisseur (E) ont une structure en nappes.

4.  Installation selon la revendication 1 caractérisée en ce que la circulation des produits et la circulation de l'eau se font à contre-courant intégral, un passage de liaison (F) étant prévu sous la chambre de stérilisation (D) pour la circulation de l'eau du refroidisseur (E) vers la zone de préchauffage (C).

**Office européen des brevets**

# RAPPORT DE RECHERCHE EUROPEENNE

Numero de la demande

EP 91 40 2185

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | AT-B- 311 775 (SOCIETE DES PRODUITS NESTLE S.A.)<br>* figures 1,2; revendication 1 *<br>--- | 1 | A 23 L 3/00<br>A 23 L 3/02 |
| A | US-A-4 346 650 (E. ZAITSU)<br>* abrégé; figure 1a *<br>--- | 1 | |
| A | EP-A-0 304 655 (FMC CORP.)<br>* figure 1; revendication 1 *<br>--- | 1 | |
| D,A | EP-A-0 082 228 (R. GOMEZ)<br>* revendications 1,2 *<br>----- | 1 | |

**DOMAINES TECHNIQUES RECHERCHES (Int. Cl.5)**

A 23 L 3/00

Le présent rapport a été établi pour toutes les revendications

| Lieu de la recherche | Date d'achèvement de la recherche | Examinateur |
|---|---|---|
| BERLIN | 17-10-1991 | SCHULTZE D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)